# EUROPEAN PATENT APPLICATION

(11) **EP 4 715 628 A1**
(43) Date of publication of application: **25.03.2026**
(21) Application number: 24202313.3
(22) Date of filing: 24.09.2024
(51) Int. Cl.: G06F 16/332

(54) **A METHOD FOR PROVIDING AT LEAST ONE DOCUMENT RELATED TO AT LEAST ONE DEVICE OF A PREDETERMINED REGION FOR A USER BY AN ELECTRONIC COMPUTING DEVICE, A COMPUTER PROGRAM PRODUCT, A COMPUTER-READABLE STORAGE MEDIUM, AS WELL AS AN ELECTRONIC COMPUTING DEVICE**

(71) Applicant: Siemens Schweiz AG, 8047 Zürich (CH)
(72) Inventor: Vaikar, Susmita, 6037 Root (CH); Chekalin, Victor, 02-495 Warszaw (PL); Fechtig, Marco, 79790 Kuessaberg (DE)
(74) Representative: Siemens Patent Attorneys

(57) **Abstract**

The invention relates to a method for providing at least one document (12, 14) related to at least one device (16) of a predetermined region (18) for a user (20) by an electronic computing device (10), comprising the steps of: providing the at least one document (12, 14) by the electronic computing device (10); analyzing the document (12, 14) depending on a relation to the at least one device (16) and depending on an affiliation to the region (18) by the electronic computing device (10); linking the at least one document (12, 14) to the at least one device (16) and to the at least one region (18) depending on the analyzation by the electronic computing device (10); receiving a search query (26) for the at least one device (16) and/or region (18) of the user (20) by an input device (22) of the electronic computing device (10);
- linking the search query (26) to the at least one document (12, 14) by the electronic computing device (10); and providing the linked document (12, 14) for the user (20) by an output device (24) of the electronic computing device (10). Furthermore, the present invention relates to a computer program product, a computer-readable storage medium, as well as an electronic computing device (10).

## Description

The present invention relates to a method for providing at least one document related to at least one device of a predetermined region for a user by an electronic computing device according to pending claim 1. Furthermore, the present invention relates to a corresponding computer program product, a corresponding computer-readable storage medium, as well as to a corresponding electronic computing device.

When retrieving or downloading documents related to an object or area, other related documents are needed as well, for example, when changing a radiator for a heating plant the schematic of the heating plant and the rooms' effects is also relevant. Often such maintenance and servicing is done by subcontractors who are sent such information in advance. It is tedious to retrieve these documents and view or send these to the relevant contractors.

Therefore, in the state of the art, a manual search of related information digitally and/or paper based on keywords and then downloading the information one by one and archiving it manually in a single place is performed. Typically, it relies one acquired knowledge by a person and this fails if the person is not knowledgeable about the system and/or there is a change in responsibility. Facilities typically outsource maintenance and changing subcontractors can lead to information loss.

Furthermore, there are a plurality of documents uploaded by a customer from commissioning to maintenance phases. Searching the relevant documents when it's needed for maintenance of an equipment is tedious and it is difficult to pull out the documents relevant, which make the maintenance or inspection slow and time consuming.

Therefore, in the state of the art, each document has additional properties and text defined for the document. The context search is either based on folder structures or these attributes and text. Furthermore, only folder structures cannot fully classify a document for a search.

Therefore, there is a need in the art to provide documents for a user in an improved manner.

Therefore, it is an object of the invention to provide a method, a corresponding computer program product, a corresponding computer-readable storage medium, as well as a corresponding electronic computing device, by which documents related to a specific device can be provided in an improved manner.

This object is solved by a method, a corresponding computer program product, a corresponding computer-readable storage medium, as well as a corresponding electronic computing device according to the independent claims. Advantageous embodiments are presented in the dependent claims.

One aspect of the invention relates to a method for providing at least one document related to at least one device of a predetermined region for a user by an electronic computing device. The at least one document is provided by the electronic computing device. The document is analyzed depending on a relation to the at least one device and depending on an affiliation to the region by the electronic computing device. The at least one document is linked to the at least one device and to the at least one region depending on the analyzation by the electronic computing device. A search query for the at least one device and/or a region of the user is received by an input device of the electronic computing device. The search query is linked with the at least one document by the electronic computing device and the linked document is provided for the user by an output device of the electronic computing device.

Therefore, the at least one document related to the at least one device of the predetermined region can be provided for the user in an improved manner.

Different devices can be physically or communicatively related to each other and the documents related to the related devices can now be provided for the user as well as the documents related to the device itself. Devices may comprise a physical connection. Two devices can be connected to each other physically, for example through cables or connectors. This type of connection allows the devices to exchange data and work together directly. Two devices can communicate with each other wirelessly, for example via Bluetooth, Wi-Fi, or mobile networks. This type of connection allows the devices to exchange data and work together without physical cables. Two devices can communicate with each other through a gateway that acts as an intermediary between them. The gateway can receive data from one device and forward it to another. Two devices can communicate with each other through a cloud infrastructure, where the data is transmitted over the internet. This allows the devices to communicate and work together from anywhere in the world. Two devices can interact with each other through a shared interface, for example by using the same app or software. This type of connection allows the devices to exchange data and work together by sharing a user interface. Two devices can work independently but be coordinated by a controlling instance. For example, in a smart home, different devices such as lights, heating, and air conditioning can work independently, but are coordinated by a central control unit. Therefore, there are many ways that different devices can be physically or communicatively related, depending on the use case and the requirements for communication and collaboration between the devices. However the relation is just described between two devices, it is obvious that more than two devices can be related to each other in any kind of relation mentioned above.

Therefore, the invention provides a method improving the state of the art, wherein the state of the art search for documents during operations and maintenance uses tags or properties. Deciding on relevant properties to search and populating these is tedious and opens up potential for relevant documents not to be found and every equipment/device the same problem would arise again until the data is changed. It is almost impossible to predict all keywords for search upfront and define these in tags and properties. Therefore, linking device and location to a document is a tedious and manual task and automating this offers significant advantage for correlating information to facility management. Without this correlation, maintaining documents relates to equipment or location can be time consuming and manual specially when there are a huge number of documents, which is typically the case with large facilities/regions.

Therefore, the solution is based on a mechanism, where the electronic computing device is in particular trained on the document content for a customer. The suggestive linking of the device to the document is in particular done in an automated way. On establishing this links the user is able to search any information for a maintenance job and this is in particular based on the content of the document and the asset information linked to it. The result of the research query is in particular the consolidated information found and the document or a plurality of documents found as well as it is configured to point out the exact location in the document where the relevant information is found.

As an example, the region can be a house comprising at least one radiator. The radiator may belong to one room, but the radiator may affect other rooms as well. Therefore, by searching for documents related to the radiator as the device documents related to the other room and devices of that room can linked to the radiator and can be provided by the electronic computing device for the user. Therefore, the user may have all documents provided, wherein the radiator may have an impact on the different rooms and therefore documents relating to the rooms may also be provided.

Therefore, a search query may be a sequence of words of phrases that the user may enter into a search field, in particular via the input device, to find information, in particular documents related to the search query. The electronic computing device analyzes the search query by identifying relevant keywords and phrases and then generates a list of results that match the users' requests, in particular a list of the documents related to the device. The object of a search query is to retrieve the most relevant and accurate results from a large data set or data base, which can be achieved through various search algorithm, natural language processing techniques, and machine-learning models. The quality of a search query depends on several factors, such is the relevance and specifically of the keywords, the accuracy of the algorithm and the users search behavior and intend. By understanding the users' needs, interests and preferences, search queries can help the user experience, increase engagement, and provide the needed documents. Over all, a search query is an essential component of information retrieval and natural language processing, which enables users to find what the relevant documents quickly and efficiently, and helps organizations to deliver targeted and relevant content to their audience.

Therefore, for example, the user may input a name of a device or a name of the region. When inputting the name of the device, documents related to the device and documents related to other device related to the device as well as documents related to the region, the device is installed can be presented. When inputting the name of the region all devices and the related documents may be presented. Furthermore, documents of regions related to the regions and the devices of the related regions can be provided.

According to an embodiment, the electronic computing device comprises an artificial intelligence at least for reading and analyzing the document, which can be, for example text-based or even image-based. In particular, the artificial intelligence can be combined with a so-called large language model (LLM) or other generative Al model, in particular to create advanced technologies that may help for linking documents to the device as well as to analyze the search query of the users. In particular, the artificial intelligence and the large language model can be combined to create advanced natural language processing (NLP) applications that understand, generate and interact with the human language in various domains and contexts.

The large language model may in particular be a neuronal network module trained on massive amounts of text data from for example the web, books, articles, and other sources. These models can capture the statistical patterns, semantic relationships, and synthetic structures of human language, which is essential for NLP applications. In particular, the artificial intelligence, in particular the large language model, may be used to interact with the human language and for example to enable the document search for the user.

In another embodiment, depending on the analyzation a plurality of documents is linked to the at least one device and/or the region. For example, one device may comprise different documents, for example technical documents, warranty documents or other documents. Furthermore, the plurality of linked documents may be from other devices, in particular, where a relation of the device and other devices is found. Therefore, a different documents describing the device directly and/or describing devices which are related to the device are provided. Therefore, the user can get an overview of related devices and may get directly the documents related to the device as well as to the related devices.

In another embodiment, a place of discovery of a relation between the search query and the at least one document is highlighted in the presented document. For example, the user may input a keyword as the search query. The keyword from the search query is then searched and the document is outputted. In the document, the keyword may be highlighted, and therefore the user may get the information where the place of discovery of the keyword is. In particular, therefore the user may found for example an abstract related to the device in an improved manner.

In another embodiment, a releasing condition of the at least one document is generated depending on the analyzation. For example, the document can be determined as confidential in first level or a second level or a third level. In particular, depending on the classification of the document, which can be determined by the electronic computing device during the analyzation, the releasing condition can be generated. Therefore, the user may only get documents, which the user is allowed to see.

In another embodiment, depending on an authorization of the user and depending on the releasing condition the at least one document is provided. In particular, if the authorization of the user is not high enough for the releasing condition, a presentation/the providing of the document is disregarded. If the authorization is higher than the releasing condition, the document is provided for the user.

In another embodiment, depending on the analyzation an interconnectivity from the device to a further device is determined. In particular, the interconnectivity may also be regarded as a relation between the device and the further device. Therefore, the relation between the device and the further device may also be used for providing documents of the device and/or the other device. Furthermore, an interconnectivity between the region/parts of the region, for example rooms of the region, and the device may be determined and depending on that the interconnectivity of devices may be determined. Therefore, for example an impact on the further device can be determined in an easy manner.

In another embodiment, depending on the interconnectivity an impact of a change of function of the device to the further device is determined. For example, if the device needs to be maintained, and therefore the function of the device may switch from an on-status to an off-status, the further device may be impacted of that. Therefore, this impact, for example that the further device cannot work without the device, this impact can be determined and for example displayed on a display device of the electronic computing device. Therefore, the user may get the information, that changing the function of the device has an impact to the further device, and therefore, a further action for the further device has to be performed. For example, the further device has also be shut down.

In another embodiment, depending on the determined impact a suggestion for a change of function of the further device is determined. For example, when the device is shut down, a suggestion for also shutting down the further device is provided. In particular, depending on the suggestion, control signals for shutting down the device as well as for shutting down the further device may be provided.

In another embodiment, a relation between the at least one document and the device is determined depending on a region information model, in particular a building information model. For example, when maintaining the equipment/device or the location, the solution introduces an ability to finding relevant information based on the information available, for example in the building information modelling, and/or modelled in a common data base with the help of physical correlations and this information together can be downloaded or sent together collectively. For example, by the exemplary radiator, not only the documents of the radiator but also that of the system the radiator belongs to and the rooms the system affects can be retrieved and also downloaded for the future use, giving the user has the permission to read the documents. In particular, individual documents related to devices, systems and rooms are maintained by many systems and therefore can also be retrieved.

In another embodiment, the electronic computing device comprises a self-learning capability for providing the at least one document depending on the search query. In particular, the electronic computing device has a self-learning capability to improve the accuracy of the search and for example asks for more detailed queries were applicable to narrow down the search. Therefore, an exact providing of documents can be provided.

In particular, the present invention is a computer-implemented method. Therefore, another aspect of the invention relates to a computer program product, comprising program code means for performing the method according to the preceding aspect.

Furthermore, the present invention relates to a computer-readable storage medium comprising at least the computer program product according to the preceding aspect.

A still further aspect of the invention relates to an electronic computing device for providing at least one document related to at least one device of a predetermined region for a user, comprising at least one input device and one output device, wherein the electronic computing device is configured for performing a method according to the preceding aspect. In particular, the method is performed by the electronic computing device.

Advantageous embodiments of the method are to be regarded as advantageous embodiments of the computer program product, the computer-readable storage medium, as well as the electronic computing device. The electronic computing device therefore comprises means for performing the method.

A computing unit/electronic computing device may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

The electronic computing device may in particular use the technique of NLP. NLP may use different technical methods for providing its service: Tokenization: This is the process of breaking down text into individual words or tokens. Tokenization is a fundamental step in NLP, as it allows us to analyse and manipulate text at the word level; Part-of-Speech Tagging: This is the process of labeling each word in a sentence with its corresponding part of speech (e.g., noun, verb, adjective, etc.). Part-of-speech tagging helps us understand the syntactic structure of a sentence and is often used as an intermediate step in more complex NLP tasks; Parsing: This is the process of analyzing the grammatical structure of a sentence to identify its subject, verb, object, and other grammatical relationships. Parsing is used to extract meaning from text and is often used in applications such as machine translation and sentiment analyzis; Named Entity Recognition (NER): This is the process of identifying and categorizing named entities (e.g., people, organizations, locations) in text. NER is used in a variety of applications, including information extraction, question answering, and search. Sentiment Analyzis: This is the process of analyzing text to determine its overall sentiment or emotion. Sentiment analyzis is used in applications such as social media monitoring, customer feedback analyzis, and brand reputation management. Machine Translation: This is the process of automatically translating text from one language to another. Machine translation uses techniques such as statistical machine learning and neural machine translation to generate translations that are increasingly accurate and idiomatic. Text Classification: This is the process of categorizing text into predefined categories based on its content. Text classification is used in applications such as spam filtering, topic modeling, and sentiment analyzis. Information Extraction: This is the process of extracting structured information from unstructured text. Information extraction involves techniques such as named entity recognition, part-of-speech tagging, and parsing to identify and extract relevant information from text. Chatbots and Virtual Assistants: These are Al systems that use NLP to interact with users in natural language. Chatbots and virtual assistants are used in applications such as customer service, information retrieval, and personal assistance. Transfer Learning: This is a technique in NLP where pre-trained models are fine-tuned on specific tasks or domains. Transfer learning has been shown to be highly effective in NLP, allowing models to leverage large amounts of pre-existing knowledge and adapt to new tasks with minimal data.

In order to provide a robust NLP, training of the model is required. Training data is the input that is used to train NLP models. It typically consists of large amounts of text data, along with labels or annotations that indicate the desired output for each input. The quality and quantity of training data are critical factors in determining the performance of NLP models. There are several types of training data commonly used in NLP: Annotated Data: This is training data that has been manually labeled or annotated by human experts. For example, a dataset of product reviews might be annotated with sentiment labels (positive, negative, neutral) to train a sentiment analyzis model; Synthetic Data: This is training data that is generated artificially, often using algorithms or templates. Synthetic data can be useful for tasks where annotated data is scarce or expensive to obtain. For example, a synthetic dataset of dialogues might be generated to train a chatbot model; Unsupervised Data: This is training data that does not have any associated labels or annotations. Unsupervised data can be used to train models for tasks such as clustering, topic modeling, and word embedding; Pre-trained Models: These are NLP models that have been pre-trained on large amounts of text data, often using unsupervised learning techniques. Pre-trained models can be fine-tuned on specific tasks or domains using transfer learning; Data Augmentation: This is a technique used to artificially increase the size and diversity of training data by applying transformations such as synonym replacement, insertion, deletion, and substitution. Data augmentation can help improve the robustness and generalization of NLP models; Data Balancing: This is a technique used to address class imbalance in annotated datasets. Class imbalance occurs when one class has significantly more examples than another class, leading to bias in the model. Data balancing techniques include oversampling, undersampling, and SMOTE (Synthetic Minority Over-sampling Technique); Data Cleaning: This is a preprocessing step used to remove noise and inconsistencies from training data. Data cleaning involves techniques such as spelling correction, punctuation normalization, and stopword removal; Data Splitting: This is the process of dividing the training data into separate sets for training, validation, and testing. The training set is used to train the model, the validation set is used to tune hyperparameters and prevent overfitting, and the test set is used to evaluate the final performance of the model.

For use cases or use situations which may arise in a method according to the invention and which are not explicitly described herein, it may be provided that, in accordance with the method, an error message and/or a prompt for user feedback is output and/or a default setting and/or a predetermined initial state is set.

Independent of the grammatical term usage, individuals with male, female or other gender identities are included within the term.

Further features and feature combinations of the invention are obtained from the figure and their description as well as the claims. In particular, further implementations of the invention may not necessarily contain all features of one of the claims. Further implementations of the invention may comprise features or combinations of features, which are not recited in the claims.

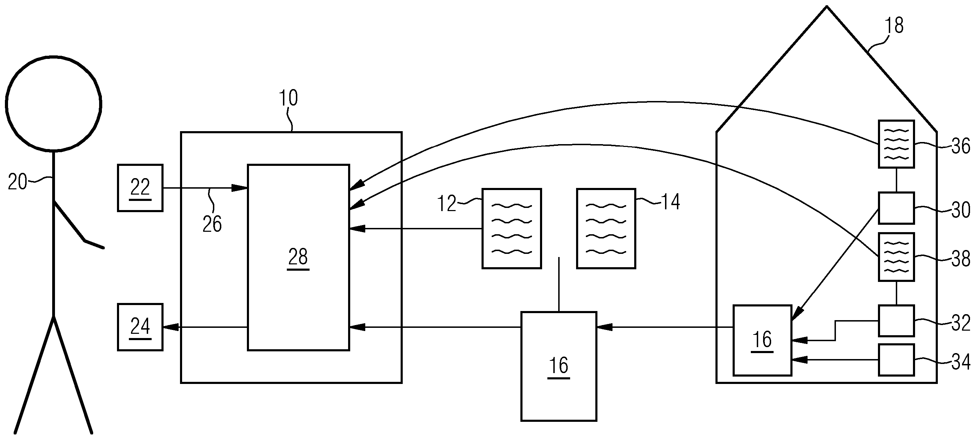

Therefore, Fig. 1 shows a schematic block diagram according to an embodiment of an electronic computing device.

In the figure the same elements or elements with the same function are indicated by the same reference signs.

Fig. 1 shows a schematic block diagram according to an embodiment of an electronic computing device 10. The electronic computing device 10 is configured for providing at least one document 12, 14 related to at least one device 16 of a predetermined region 18 for a user 20. The electronic computing device 10 therefore comprises at least one input device 22 and one output device 24.

According to the embodiment provided by the electronic computing device 10 the at least one document 12, 14 is provided by the electronic computing device 10. The document 12, 14 is analyzed depending on a relation to the at least one device 16 and depending on an affiliation to the region 18 by the electronic computing device 10. The at least one document 12, 14 is linked to the at least one device 16 and to the at least one region 18 depending on the analyzation by the electronic computing device 10. A search query 26 for the at least one device 16 and/or a region 18 is received, in particular by the user 20, by the input device 22. The search query 26 is linked with the at least one document 12, 14 by the electronic computing device 10 and the linked document 12, 14 is provided for the user by the output device 24, for example a display device, of the electronic computing device 10.

In particular, the electronic computing device 10 may comprise an artificial intelligence 28 at least for analyzing the document 12, 14. The document 12, 14 may for example a technical description of the device 16, a warranty of the device 16, a location plan of the device 16, or furthermore.

As shown in Fig. 1, depending on the analyzation a plurality of documents 12, 14 is linked to the at least one device 16 or to the region 18. Furthermore, a place of discovery of a relation between the search query 26 and the at least one document 12, 14 is highlighted in the document 12, 14. According to another embodiment a releasing condition of the at least one document 12, 14 is generated depending on the analyzation. Depending on an authorization of the user 20 and depending on the releasing condition the at least one document 12, 14 is provided.

Furthermore, depending on the analyzation an interconnectivity from the device 16 to a further device 30, 32, 34 is determined. For example, depending on the interconnectivity an impact of a change of function of the device 16 to the further device 30, 32, 34 is determined. Furthermore, depending on the determined impact a suggestion for a change of function of the further device 30, 32, 34 is determined.

Fig. 1 further shows, that also further documents 36, 38, which are related to the further devices 30, 32, 34 may be provided for the user 20, when searching for the device 16. According to another embodiment a relation between the at least one document 12, 14 and the device 16 is determined depending on a region information model, in particular a building information model. Furthermore, the electronic computing device 10 may comprise a self-learning capability for providing at least one document 12, 14 depending on the search query 26.

Therefore, the provided solution is a mechanism, where in particular the artificial intelligence 28 can be trained on the document content for the user 20. The suggestive linking of the device 16 to the document 12, 14 is done automatically. On establishing this link the user 20 is able to search any information for a maintenance job and this is in particular based on the content of the document 12, 14 and the device information linked to it. The electronic computing device 10 may comprise the self-learning capability to improve the accuracy of the search query 26 and ask for more granular queries were applicable to narrow down the search. In particular, the electronic computing device 10 is configured to show only the information that the current user 20 is allowed to see. The result of the search is in particular the consolidated information found on all the documents as well as the exact location inside the documents 12, 14 is pointed out, where the relevant information is found.

Furthermore, for example for maintaining the device 16 or the region 18, the solution introduces the capability to finding relevant information based on the information available in the so-called building information model and/or a model in a common data base with the help of physical correlations, wherein the documents 12, 14 can be downloaded to get them collectively.

For example, in a so-called radiator case, wherein the device is a radiator, not only the documents 12, 14 of the radiator but also that of the further devices 30, 32, 34, which the radiator may belong to and the rooms can be retrieved and also downloaded for future use.

### List of Reference

- 10: electronic computing device
- 12: document
- 14: document
- 16: device
- 18: region
- 20: user
- 22: input device
- 24: output device
- 26: search query
- 28: artificial intelligence
- 30: further device
- 32: further device
- 34: further device
- 36: further document
- 38: further document

## Claims

1. A method for providing at least one document (12, 14) related to at least one device (16) of a predetermined region (18) for a user (20) by an electronic computing device (10), comprising the steps of:
- providing the at least one document (12, 14) by the electronic computing device (10);
- analyzing the document (12, 14) depending on a relation to the at least one device (16) and depending on an affiliation to the region (18) by the electronic computing device (10);
- linking the at least one document (12, 14) to the at least one device (16) and to the at least one region (18) depending on the analyzation by the electronic computing device (10);
- receiving a search query (26) for the at least one device (16) and/or region (18) of the user (20) by an input device (22) of the electronic computing device (10);
- linking the search query (26) to the at least one document (12, 14) by the electronic computing device (10); and
- providing the linked document (12, 14) for the user (20) by an output device (24) of the electronic computing device (10).

2. The method according to claim 1, wherein
the electronic computing device (10) comprises an artificial intelligence (28) at least for analyzing the document (12, 14).

3. The method according to claim 1 or 2, wherein
depending on the analyzation a plurality of documents (12, 14) is linked to the at least one device (16) and/or the region (18).

4. The method according to claim 3, wherein
depending on the search query (26) the plurality of linked documents (12, 14) is provided on the output device (24).

5. The method according to any one of claims 1 to 4, wherein
a place of discovery of a relation between the search query (26) and the at least one document (12, 14) is highlighted in the document (12, 14).

6. The method according to any one of claims 1 to 5, wherein
a releasing condition of the at least one document (12, 14) is generated depending on the analyzation.

7. The method according to claim 6, wherein
depending on an authorization of the user (20) and depending on the releasing condition the at least one document (12, 14) is provided.

8. The method according to any one of claims 1 to 7, wherein
depending on the analyzation an interconnectivity from the device (16) to a further device (30, 32, 34) is determined.

9. The method according to claim 8, wherein
depending on the interconnectivity an impact of a change of function of the device (16) to the further device (30, 32, 34) is determined.

10. The method according to claim 9, wherein
depending on the determined impact a suggestion for a change of function of the further device (30, 32, 34) is determined.

11. The method according to any one of claims 1 to 10, wherein
the relation between the at least one document (12, 14) and the device (16) is determined depending on a region information model, in particular a building information model.

12. The method according to any one of claims 1 to 11, wherein
the electronic computing device (10) comprises a self-learning capability for providing the at least one document (12, 14) depending on the search query (26).

13. A computer program product comprising program code means for performing a method according to any one of claims 1 to 12.

14. A computer-readable storage medium comprising at least the computer program product according to claim 13.

15. An electronic computing device (10) for providing at least one document (12, 14) related to at least one device (16) of a predetermined region (18) for a user (20), comprising at least one input device (22) and one output device (24), wherein the electronic computing device (10) is configured for performing a method according to any one of claims 1 to 12.
